# EUROPEAN PATENT SPECIFICATION

(11) **EP 4 600 287 B1**
(45) Date of publication and mention of the grant of the patent: **03.06.2026**
(21) Application number: 23874609.3
(22) Date of filing: 13.09.2023
(51) Int. Cl.: C08G 59/72, C08J 5/04, C08J 5/24, C08L 63/00, F16J 12/00, F17C 1/02, C08G 59/50

(54) **THERMOSETTING RESIN COMPOSITION, CURED PRODUCT OF SAME, PREPREG, FIBER-REINFORCED COMPOSITE MATERIAL, AND HIGH-PRESSURE GAS CONTAINER**
WÄRMEHÄRTENDE HARZZUSAMMENSETZUNG, GEHÄRTETES PRODUKT DARAUS, PREPREG, FASERVERSTÄRKTES VERBUNDMATERIAL UND HOCHDRUCKGASBEHÄLTER
COMPOSITION DE RÉSINE THERMODURCISSABLE, PRODUIT DURCI DE CELLE-CI, PRÉIMPRÉGNÉ, MATÉRIAU COMPOSITE RENFORCÉ PAR DES FIBRES ET RÉCIPIENT DE GAZ À HAUTE PRESSION

(30) Priority: 04.10.2022 JP 2022160339
(43) Date of publication of application: 13.08.2025
(73) Proprietor: MITSUBISHI GAS CHEMICAL COMPANY, INC., Chiyoda-ku Tokyo 100-8324 (JP)
(72) Inventor: IKEUCHI, Kousuke, Hiratsuka-shi, Kanagawa 254-0016 (JP); WAKAHARA, Daiki, Hiratsuka-shi, Kanagawa 254-0016 (JP); MATSUMOTO, Nobuhiko, Hiratsuka-shi, Kanagawa 254-0016 (JP)
(74) Representative: Vossius & Partner Patentanwälte Rechtsanwälte mbB
(86) International application number: PCT/JP2023/033282
(87) International publication number: WO 2024/075480

(56) References cited:
- WO-A1-2015/084553
- WO-A1-2020/178105
- WO-A1-2022/118827
- WO-A1-98/23658
- WO-A2-2010/007148
- JP-A- 2004 104 042
- JP-A- 2004 107 415
- JP-A- 2004 107 416
- JP-A- 2022 022 548
- JP-A- H03 294 329
- JP-A- H07 224 149
- JP-A- S57 153 046
- JP-A- S6 381 139
- JP-A- S6 420 216
- US-A1- 2017 130 017
- US-B1- 7 714 037

## Description

### Technical Field

The present invention relates to a thermosetting resin composition and a cured product thereof, a prepreg, a fiber-reinforced composite material, and a high-pressure gas container containing the fiber-reinforced composite material.

### Background Art

In recent years, environmentally friendly natural gas vehicles (CNG vehicles) and fuel cell vehicles (FCV) are becoming more popular. Fuel cell vehicles use fuel cells as their power sources, and thus it is essential to construct hydrogen stations where hydrogen as the fuel thereof is compressed to a high pressure and filled to the vehicles.

Steel tanks have been used so far as high pressure gas storage tanks for hydrogen stations for fuel cell vehicles, or automotive fuel tanks for vehicles such as CNG vehicles and fuel cell vehicles, however, a lighter high pressure gas storage tank using a resin material for the tank liner or an outer layer thereof is under development. Weight reduction of automotive fuel tanks provides benefits including capability of improving fuel efficiency of the vehicles equipped therewith.

A pressure vessel such as a high pressure gas storage tank usually has a metallic liner and an outer layer provided so as to cover an outer surface of the liner; however, in recent years, a plastic liner pressure vessel and a linerless pressure vessel are also being under study in order to create a lighter weight pressure vessel.

As a manufacturing method of pressure vessels, there is known a method of manufacturing a pressure vessel through filament winding molding by using a tow-prepreg (also referred to as tow-preg) having reinforcing fibers pre-impregnated with an epoxy resin composition.

Prepregs and curable resin compositions suitable for prepregs are also being investigated. For example, JP 6993549 B discloses, as a prepreg useful for molding a fiber-reinforced plastic having high strength and high toughness, a prepreg containing carbon fibers and a matrix resin, in which the matrix resin is a curable resin composition containing a bisphenol-type epoxy resin, (meth)acrylate compounds having two or more functional groups, and a curing agent containing dicyandiamide and a radical polymerization agent, and a cured product of the curable resin composition has a predetermined bending elastic modulus and breaking elongation. There is also described a method of producing a tubular body by winding the prepreg around a mandrel.

JP 2022-27815 A discloses, as a curable resin composition for a prepreg useful for molding a fiber-reinforced plastic having high strength and high toughness, a curable resin composition containing two types of epoxy resins satisfying predetermined requirements, (meth)acrylate compounds having two or more functional groups, and a curing agent.

US 2017/130017 A1 relates to a tow prepreg and pressure vessel formed using fiber-reinforced composite material and their manufacturing methods. A tow prepreg is made by impregnating a reinforcing fiber bundle with a matrix resin composition containing an epoxy resin, an epoxy resin curing agent and a pre-gelatinizing agent, wherein the curing agent may be a boron trihalide-amine complex.

### Summary of Invention

### Technical Problem

The thermosetting resin composition used for the matrix resin of a prepreg is required to have a long pot life in order to ensure the long shelf life of the prepreg. Moreover, in order to ensure heat resistance and high toughness in the fiber-reinforced composite material obtained by curing the prepreg, the thermosetting resin composition used for the matrix resin of the prepreg is required to provide a cured product thereof having both high glass transition temperature and high elongation percentage. However, all of these required characteristics are difficult to be satisfied by the techniques disclosed in JP 6993549 B and JP 2022-27815 A.

An object of the present invention is to provide: a thermosetting resin composition which can provides a cured product having a high glass transition temperature and a high elongation percentage and has a long pot life; a cured product thereof; a prepreg; a fiber-reinforced composite material; and a high-pressure gas container including the fiber-reinforced composite material.

### Solution to Problem

The present inventors have found that the problems set forth above can be solved by a thermosetting resin composition containing an epoxy resin, a (meth)acrylate compound, an epoxy resin curing agent, and a thermal radical polymerization initiator, in which a predetermined (meth)acrylate compound and epoxy resin curing agent are used.

That is, the present invention relates to the following.
[1] A thermosetting resin composition containing a component (A): an epoxy resin; a component (B): a (meth)acrylate compound; a component (C): an epoxy resin curing agent; and a component (D): a thermal radical polymerization initiator, wherein the component (B) includes a component (B1): a poly(butadiene-CO-acrylonitrile) having an acryloyloxy group each at both termini; and a component (B2): a polyfunctional (meth)acrylate other than the component (B1), and the component (C) includes a boron amine complex.
[2] The thermosetting resin composition according to [1], wherein the component (B2) contains a polyfunctional (meth)acrylate containing an aromatic ring.
[3] The thermosetting resin composition according to [1] or [2], in which a content of the component (B) is from 5 to 50 parts by mass per 100 parts by mass of the component (A) in the thermosetting resin composition.
[4] The thermosetting resin composition according to any one of [1] to [3], wherein a content of the component (B1) in the component (B) is from 1 to 70 mass%.
[5] The thermosetting resin composition according to any one of [1] to [4], wherein the boron amine complex is a boron trichloride amine complex.
[6] The thermosetting resin composition according to any one of [1] to [5], wherein an amine component in the boron amine complex is a trialkylamine.
[7] A cured product of the thermosetting resin composition according to any one of [1] to [6].
[8] A prepreg containing: the thermosetting resin composition according to any one of [1] to [6]; and reinforcing fibers.
[9] The prepreg according to [8], wherein the prepreg is a tow-prepreg.
[10] A fiber-reinforced composite material obtained by curing the prepreg according to [8] or [9].
[11] A high-pressure gas container including the fiber-reinforced composite material according to [10].

### Advantageous Effects of Invention

The present invention can provide: a thermosetting resin composition which can provide a cured product having a high glass transition temperature and a high elongation percentage and has a long pot life; a cured product thereof; a prepreg; a fiber-reinforced composite material; and a high-pressure gas container containing the fiber-reinforced composite material. The high-pressure gas container can be manufactured by filament winding molding using the prepreg of the present invention, and can also be made into a plastic liner high-pressure gas container or a linerless high-pressure gas container.

### Description of Embodiments

### [Definitions]

As used herein, "(meth)acrylate" includes both acrylate and methacrylate.

As used herein, the "room temperature" means 25°C unless otherwise specified.

### [Thermosetting resin composition]

The thermosetting resin composition of the present invention (hereinafter, also referred to as "composition of the present invention") contains:
a component (A): an epoxy resin;
a component (B): a (meth)acrylate compound;
a component (C): an epoxy resin curing agent; and
a component (D): a thermal radical polymerization initiator, wherein the component (B) contains a component (B1): poly(butadiene-CO-acrylonitrile) having an acryloyloxy group each at both termini and a component (B2): a polyfunctional (meth)acrylate other than the component (B1), and the component (C) contains a boron amine complex.

The composition of the present invention has the composition set forth above and thus provides a cured product having a high glass transition temperature (Tg) and a high elongation percentage, and furthermore the composition has a long pot life.

The reason why the effect set forth above can be achieved in the present invention is not clear, but it can be considered as follows.

The thermosetting resin composition of the present invention contains as thermosetting resins the epoxy resin (A) and the (meth)acrylate compound (B). The epoxy resin curing agent (C) is a curing agent for the epoxy resin (A), and the thermal radical polymerization initiator (D) acts as a thermal radical polymerization initiator for curing the (meth)acrylate compound (B).

A thermosetting (epoxy) resin composition including an epoxy resin and an epoxy resin curing agent is generally excellent in curability, heat resistance, and the like, but there has been a problem of low elongation percentage of a cured product thereof to be used in a high-pressure gas container, which is required to have high toughness, or the like. In addition, the epoxy resin composition usually cures rapidly, and hence an improvement in pot life is also needed, in particular, for use in prepregs to be stored at room temperature.

The component (C) used in the thermosetting resin composition of the present invention contains a boron amine complex, and thus the pot life is increased. Moreover, it is believed that the composition of the present invention is a hybrid of an epoxy resin curing system of the component (A) - the component (C) and a (meth)acrylate curing system of the component (B) - the component (D), whereby the probability of contact between the component (A) and the component (C) in the composition is reduced and thus the pot life has been further increased.

Furthermore, the component (B) used in the present invention contains the component (B1): a poly(butadiene-CO-acrylonitrile) having an acryloyloxy group each at both termini; and the component (B2): a polyfunctional (meth)acrylate other than the component (B1). It is believed that the elongation percentage of the cured product has been increased as the component (B) contains the component (B1) that is a specific diacrylate having a rubber structure, and an excessive decrease in Tg of the cured product due to the use of the component (B1) has been able to be suppressed as the component (B) contains the component (B2).

### <Component (A): Epoxy resin>

The epoxy resin (A) used in the present invention is not particularly limited as long as it is a polyfunctional epoxy resin having two or more epoxy groups, but from a point of view of improving Tg of the cured product, a polyfunctional epoxy resin containing an aromatic ring or alicyclic structure in the molecule is preferable.

As specific examples of the epoxy resin (A), mention may be made of at least one selected from the group consisting of an epoxy resin having a glycidylamino group derived from metaxylylenediamine, an epoxy resin having a glycidylamino group derived from paraxylylenediamine, an epoxy resin having a glycidylamino group derived from 1,3-bis(aminomethyl)cyclohexane, an epoxy resin having a glycidylamino group derived from 1,4-bis(aminomethyl)cyclohexane, an epoxy resin having a glycidylamino group derived from diaminodiphenylmethane, an epoxy resin having a glycidyloxy group and/or a glycidylamino group derived from paraaminophenol, an epoxy resin having a glycidyloxy group derived from resorcinol, an epoxy resin having a glycidyloxy group derived from bisphenol A, an epoxy resin having a glycidyloxy group derived from bisphenol F, and an epoxy resin having a glycidyloxy group derived from phenol novolac. The epoxy resin may be used alone or two or more types thereof may be used in combination.

Among the above, from a point of view of improving Tg of the cured product, the epoxy resin (A) preferably contains, as a main component, at least one selected from the group consisting of an epoxy resin having a glycidylamino group derived from metaxylylenediamine, an epoxy resin having a glycidylamino group derived from paraxylylenediamine, an epoxy resin having a glycidyloxy group derived from bisphenol A, and an epoxy resin having a glycidyloxy group derived from bisphenol F; and the epoxy resin (A) more preferably contains, as a main component, at least one selected from the group consisting of an epoxy resin having a glycidyloxy group derived from bisphenol A and an epoxy resin having a glycidyloxy group derived from bisphenol F.

Note that, the term "main component" as used herein means that other components may be contained, and means that the main component is contained in an amount preferably from 50 to 100 mass%, more preferably from 70 to 100 mass%, and further preferably from 90 to 100 mass% based on the whole.

The epoxy resin (A) may be either a solid epoxy resin or a liquid epoxy resin, but the epoxy resin (A) preferably contains a liquid epoxy resin as a main component from the point of view that an impregnation into reinforcing fibers is easy when the epoxy resin (A) is applied to a prepreg. The "solid epoxy resin" refers to an epoxy resin having no fluidity at 25°C, while the "liquid epoxy resin" refers to an epoxy resin having fluidity at 25°C.

The epoxy equivalent (functional group equivalent) of the epoxy resin (A) is not particularly limited, but is preferably 1500 g/equivalent or less, more preferably 1200 g/equivalent or less, further preferably 1000 g/equivalent or less, even more preferably 800 g/equivalent or less, even more preferably 500 g/equivalent or less, more preferably 300 g/equivalent or less, further preferably 250 g/equivalent or less, even more preferably 220 g/equivalent or less, and even more preferably 200 g/equivalent or less from a point of view of facilitating impregnation into reinforcing fibers when applying the epoxy resin (A) to a prepreg, and is preferably 120 g/equivalent or more from a point of view of curability.

When a mixture of two or more epoxy resins is used as the epoxy resin (A), the epoxy equivalent of the epoxy resin (A) means the epoxy equivalent of the mixture.

### <Component (B): (Meth)acrylate compound>

The (meth)acrylate compound (B) used in the present invention contains a component (B1): a poly(butadiene-CO-acrylonitrile) having an acryloyloxy group each at both termini; and a component (B2): a polyfunctional (meth)acrylate other than the component (B1).

### (Component (B1): (Poly(butadiene-CO-acrylonitrile) having an acryloyloxy group each at both termini)

The component (B1) used in the present invention is a diacrylate having an acryloyloxy group each at both termini of a main chain containing a copolymerized structure of butadiene and acrylonitrile.

The content of the constitutional unit derived from acrylonitrile in the component (B1) is preferably from 5 to 50 mass%, more preferably from 10 to 30 mass%, and further preferably from 10 to 25 mass% from a point of view of improving Tg and the elongation percentage of the cured product.

The weight average molecular weight (Mw) of the component (B1) is preferably from 1000 to 30000, more preferably from 2000 to 10000, and further preferably from 3000 to 8000. When the Mw is 1000 or more, it is easy to contribute to the improvement of the elongation percentage of the cured product, and when the Mw is 30000 or less, it is easy to suppress the decrease of Tg of the cured product.

Examples of commercially available products of the component (B1) include "Hypro 1300X33LC" available from CHORI GLEX Co., Ltd.

The content of the component (B1) in the component (B) is preferably from 1 to 70 mass%, more preferably from 5 to 60 mass%, further preferably from 10 to 60 mass%, even more preferably from 15 to 60 mass%, and even more preferably from 15 to 50 mass%. When the content of the component (B1) in the component (B) is 1 mass% or more, it is easy to contribute to improvement of the elongation percentage of the cured product, and when the content is 70 mass% or less, it is possible to suppress a decrease in Tg of the cured product and to reduce variations in physical properties of the cured product.

### (Component (B2): Polyfunctional (meth)acrylate other than component (B1))

The component (B2) used in the present invention may be a (meth)acrylate, other than the component (B1), having two or more (meth)acrylic groups. Note that, the component (B2) is preferably a (meth)acrylate having no glycidyl group.

Examples of the (meth)acrylate other than the component (B1) include epoxy (meth)acrylate having a main skeleton derived from an epoxy compound, urethane (meth)acrylate having a main skeleton derived from a polyisocyanate and a polyol, and polyester (meth)acrylate having a main skeleton derived from a polyol. Among them, from a point of view of improving Tg and the elongation percentage of the cured product, at least one selected from the group consisting of urethane (meth)acrylate and polyester (meth)acrylate is preferable.

The number of (meth)acrylic groups contained in the component (B2) is preferably from 2 to 6, more preferably from 2 to 4, further preferably from 2 to 3, and even more preferably 2. When the number of (meth)acrylic groups included in the component (B2) is 2 or more, it is easy to contribute to improvement of Tg of the cured product, and when the number of (meth)acrylic groups of the component (B2) is 6 or less, the elongation percentage of the cured product can be maintained.

From a point of view of improving Tg of the cured product, the component (B2) preferably contains a polyfunctional (meth)acrylate containing an aromatic ring.

The aromatic ring may be a single ring or a fused ring, and examples thereof include a benzene ring, a naphthalene ring, an anthracene ring, and a tetracene ring, but are not limited thereto. Among them, at least one selected from the group consisting of a benzene ring and a naphthalene ring is preferable, and a benzene ring is more preferable.

The number of aromatic rings included in the component (B2) needs to be 1 or more, and is preferably 2 or more from a point of view of improving Tg of the cured product.

Specific examples of the polyfunctional (meth)acrylate containing an aromatic ring, which is used as the component (B2), include di(meth)acrylate having a structure derived from biphenol, di(meth)acrylate having a structure derived from bisphenol A, di(meth)acrylate having a structure derived from bisphenol F, di(meth)acrylate having a fluorene structure, and di(meth)acrylate having a structure derived from an aromatic hydrocarbon formaldehyde resin, and one type or two or more types of these can be used. The di(meth)acrylate may be any of epoxy di(meth)acrylate, urethane di(meth)acrylate, and polyester di(meth)acrylate.

The aromatic hydrocarbon formaldehyde resin is a resin obtained by reacting an aromatic hydrocarbon with formaldehyde. As the aromatic hydrocarbon, mention may be made of at least one selected from the group consisting of benzene, xylene, toluene, mesitylene, pseudocumene, ethylbenzene, propylbenzene, decylbenzene, cyclohexylbenzene, biphenyl, methylbiphenyl, naphthalene, methylnaphthalene, dimethylnaphthalene, ethylnaphthalene, anthracene, methylanthracene, dimethylanthracene, ethylanthracene, and binaphthyl, and the aromatic hydrocarbon is preferably at least one selected from the group consisting of xylene, toluene, and mesitylene, and more preferably xylene. Note that, the xylene formaldehyde resin is also referred to as a "xylene resin", the toluene formaldehyde resin is also referred to as a "toluene resin", and the mesitylene formaldehyde resin is also referred to as a "mesitylene resin".

The polyfunctional (meth)acrylate containing an aromatic ring, which is used as the component (B2), is more preferably at least one selected from the group consisting of a compound represented by the following general formula (B2-1), a compound represented by the following general formula (B2-2), and a di(meth)acrylate having a structure derived from an aromatic hydrocarbon formaldehyde resin, from a point of view of improving Tg and the elongation percentage of the cured product.

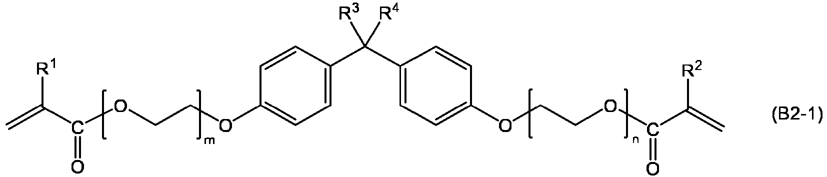

In the formula, R¹ and R² each independently represent a hydrogen atom or a methyl group, and R³ and R⁴ each independently represent a hydrogen atom or a methyl group. m and n represent the number of repeating units, and each independently represent the number of from 0 to 20.

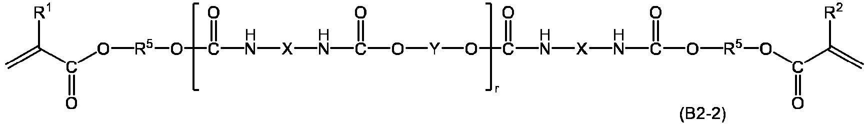

In the formula, R¹ and R² are the same as defined above, and R⁵ is an alkylene group having from 2 to 6 carbons. X is a residue of a diisocyanate and Y is a residue of a diol. Either of X or Y contains an aromatic ring. r represents the number of repeating units, and is a number greater than or equal to 1. (r + 1) units of X and r units of Y may be all the same or different from each other.

In the general formula (B2-1), R¹ and R² each are preferably a methyl group, and R³ and R⁴ each are preferably a methyl group.

From a point of view of further improving Tg and elongation percentage of the cured product, m and n in the general formula (B2-1) are each independently a number of preferably from 1 to 15, more preferably from 1 to 10, and further preferably from 2 to 6. In addition, (m + n) is a number of from 0 to 40, and is preferably a number of from 2 to 30, more preferably from 2 to 20, and further preferably from 4 to 12 from a point of view of further improving Tg and elongation percentage of the cured product.

In the general formula (B2-2), R¹ and R² each are preferably a methyl group. R⁵ is an alkylene group having from 2 to 6 carbons, and the alkylene group may be either linear or branched. R⁵ is an alkylene group preferably having from 2 to 4 carbons, more preferably having from 2 to 3 carbon atoms.

X in the general formula (B2-2) is a divalent group and is a residual group of a diisocyanate represented by OCN-X-NCO. Examples of the diisocyanate include: chain aliphatic diisocyanates such as trimethylene diisocyanate, tetramethylene diisocyanate, 1,3-pentamethylene diisocyanate, 1,5-pentamethylene diisocyanate, hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, and 3-methyl-1,5-pentamethylene diisocyanate; aliphatic diisocyanates containing an alicyclic structure, such as 1,3-cyclopentane diisocyanate, 1,4-cyclohexane diisocyanate, 1,3-cyclohexane diisocyanate, methyl-2,4-cyclohexane diisocyanate, methyl-2,6-cyclohexane diisocyanate, 1,2-bis (isocyanatomethyl) cyclohexane, 1,3-bis (isocyanatomethyl) cyclohexane, isophorone diisocyanate, and norbornane diisocyanate; and diisocyanates containing an aromatic ring, such as m-phenylene diisocyanate, p-phenylene diisocyanate, m-xylylene diisocyanate, p-xylylene diisocyanate, 2,4-tolylene diisocyanate, 2,6-tolylene diisocyanate, naphthylene-1,4-diisocyanate, and naphthylene-1,5-diisocyanate. These diisocyanates may be used alone or two or more types thereof may be used in combination.

When Y in the general formula (B2-2) does not include an aromatic ring, the diisocyanate is a diisocyanate including an aromatic ring. When Y in the general formula (B2-2) contains an aromatic ring, from a point of view of improving the elongation percentage of the cured product, the diisocyanate is preferably at least one selected from the group consisting of a chain aliphatic diisocyanate and an aliphatic diisocyanate containing an alicyclic structure, more preferably at least one selected from the group consisting of hexamethylene diisocyanate, 1,2-bis(isocyanatomethyl) cyclohexane, 1,3-bis(isocyanatomethyl) cyclohexane, and isophorone diisocyanate, and further preferably hexamethylene diisocyanate.

Y in the general formula (B2-2) is a divalent group and is a residual group of a diol represented by HO-Y-OH. Examples of the diol include: chain aliphatic diols such as ethylene glycol, propylene glycol, 1,3-propanediol, 1,4-butanediol, 1,5-pentanediol, 1,6-hexanediol, 3-methyl-1,5-pentanediol, 2-ethyl-1,3-hexanediol, diethylene glycol, triethylene glycol, polyethylene glycol, polypropylene glycol, and polytetramethylene glycol; diols containing an alicyclic structure, such as cyclohexanedimethanol and tricyclodecane dimethanol; diols containing an aromatic ring, such as biphenol, bisphenol A, bisphenol F, bisphenoxyfluorene ethanol, and diols obtained by adding ethylene oxide, propylene oxide, or caprolactone to these diols. These diols may be used alone or two or more types thereof may be used in combination.

From a point of view of improving Tg and elongation percentage of the cured product, the diol is preferably at least one selected from the group consisting of chain aliphatic diols and diols containing an aromatic ring, more preferably a diol containing an aromatic ring, and further preferably at least one selected from the group consisting of bisphenol A, bisphenol F, and diols obtained by adding ethylene oxide or propylene oxide thereto.

Y in the general formula (B2-2) is more preferably a divalent group represented by the following general formula (Y1).

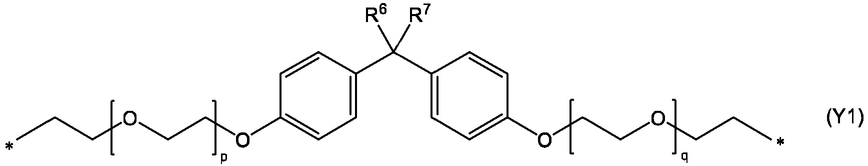

In the formula, R⁶ and R⁷ each independently represent a hydrogen atom or a methyl group, preferably a methyl group. p and q represent the number of repeating units, and each independently represent the number of from 0 to 20. * represents an atomic bonding.

r in the general formula (B2-2) is a number of 1 or more, and preferably a number of 1 or more and 200 or less.

Examples of a commercially available product of di(meth)acrylate having a structure derived from an aromatic hydrocarbon formaldehyde resin, which is used as the component (B2), include "NIKANOL XUAT" (urethane acrylate xylene resin) available from Fudow Company Limited.

The content of the polyfunctional (meth)acrylate containing an aromatic ring in the component (B2) is preferably 30 mass% or more, more preferably 50 mass% or more, further preferably 70 mass% or more, even more preferably 80 mass% or more, even more preferably 90 mass% or more, and 100 mass% or less from a point of view of improving Tg of the cured product.

As the component (B2), polyfunctional (meth)acrylates not containing an aromatic ring, such as α,ω-alkanediol di(meth)acrylate, polyethylene glycol di(meth)acrylate, polypropylene glycol di(meth)acrylate, butylene glycol di(meth)acrylate, neopentyl glycol di(meth)acrylate, pentaerythritol tri(meth)acrylate, dipentaerythritol pentaacrylate, and dipentaerythritol hexaacrylate, can also be used.

The content of the component (B2) in the component (B) is preferably from 30 to 99 mass%, more preferably from 40 to 95 mass%, further preferably from 40 to 90 mass%, even more preferably from 40 to 85 mass%, and even more preferably from 50 to 85 mass%. When the content of the component (B2) in the component (B) is 30 mass% or more, it is easy to contribute to improvement of Tg of the cured product, and when the content is 99 mass% or less, it is possible to maintain the elongation percentage of the cured product and reduce variations in physical properties of the cured product.

For the purpose of reducing the viscosity of the composition, the component (B) may contain a (meth)acrylate other than the components (B1) and (B2), such as a monofunctional (meth)acrylate, besides the component (B1) and the component (B2).

However, the total content of the component (B1) and the component (B2) in the component (B) is preferably 70 mass% or more, more preferably 80 mass% or more, further preferably 90 mass% or more, and 100 mass% or less from a point of view of improving Tg of the cured product.

The content of the component (B) in the thermosetting resin composition is preferably from 5 to 50 parts by mass, more preferably from 5 to 45 parts by mass, and further preferably from 10 to 45 parts by mass, per 100 parts by mass of the component (A). When the content of the component (B) in the thermosetting resin composition is 5 parts by mass or more per 100 parts by mass of the component (A), a long pot life is easily achieved, and when the content is 50 parts by mass or less, Tg of the cured product is easily maintained.

### <Epoxy resin curing agent (C)>

The epoxy resin curing agent (C) used in the present invention contains a boron amine complex from a point of view of achieving a long pot life.

The content of the boron amine complex in the component (C) is preferably 30 mass% or more, more preferably 50 mass% or more, further preferably 70 mass% or more, even more preferably 80 mass% or more, even more preferably 90 mass% or more, and 100 mass% or less from a point of view of achieving a long pot life.

Examples of the boron amine complex include a halogenated boron amine complex. Examples of the halogenated boron amine complex include a boron trifluoride amine complex and a boron trichloride amine complex, and from a point of view of achieving a long pot life, a boron trichloride amine complex is preferable.

Examples of the amine component in the boron amine complex include alkylamines, alkanolamines, and cycloaliphatic amines.

Examples of the alkylamine include: monoalkylamines such as monoethylamine, monopropylamine, monobutylamine, monohexylamine, monooctylamine, and monolaurylamine; dialkylamines such as dimethylamine, diethylamine, dipropylamine, dibutylamine, dihexylamine, dioctylamine, and dilaurylamine; and trialkylamines such as triethylamine, tripropylamine, tributylamine, trihexylamine, trioctylamine, trilaurylamine, N,N-dimethylethylamine, N,N-dimethylpropylamine, N,N-dimethylbutylamine, N,N-dimethylhexylamine, N,N-dimethyloctylamine, and N,N-dimethyllaurylamine.

Examples of the alkanolamine include monoethanolamine, diethanolamine, triethanolamine, monoisopropanolamine, diisopropanolamine, triisopropanolamine, N-methylethanolamine, N-methylisopropanolamine, N-butylethanolamine, N-methyldiethanolamine, N-butyldiethanolamine, and N-methyldiisopropanolamine.

Examples of the cycloaliphatic amine include piperidine, and N,N-dicyclohexylmethylamine.

Among the above, from a point of view of achieving a long pot life, the amine component in the boron amine complex is preferably a tertiary alkylated amine, that is, a trialkylamine, more preferably at least one selected from the group consisting of N,N-dimethylethylamine, N,N-dimethylpropylamine, N,N-dimethylbutylamine, N,N-dimethylhexylamine, N,N-dimethyloctylamine, and N,N-dimethyllaurylamine, and even more preferably N,N-dimethyloctylamine.

Examples of commercially available products of the boron amine complex used as the component (C) include "Accelerator DY 9577" (Boron trichloride amine complex, amine component: N,N-dimethyl-n-octylamine) available from HUNTSMAN Corporation.

The component (C) can also contain an epoxy resin curing agent other than the boron amine complex. Examples of the epoxy resin curing agent other than the boron amine complex include an amine-based curing agent, a phenol-based curing agent, an acid anhydride-based curing agent, and a hydrazide-based curing agent, and one type or two or more types of these can be used.

However, from a point of view of achieving a long pot life, the content of the epoxy resin curing agent, other than the boron amine complex, in the component (C) is preferably 70 mass% or less, more preferably 50 mass% or less, further preferably 30 mass% or less, even more preferably 20 mass% or less, even more preferably 10 mass% or less, even more preferably 5 mass% or less, and the lower limit is 0 mass%.

The content of the component (C) in the thermosetting resin composition is preferably from 0.1 to 40 parts by mass, more preferably from 0.5 to 20 parts by mass, and further preferably from 1 to 10 parts by mass, per 100 parts by mass of the component (A). When the content of the component (C) in the thermosetting resin composition is 0.1 parts by mass or more per 100 parts by mass of the component (A), curability is easily ensured, and when the content is 40 parts by mass or less, a long pot life is easily achieved.

### <Component (D): Thermal radical polymerization initiator>

The component (D) used in the present invention is required to any compound capable of generating radicals by heating to cure the component (B), and examples thereof include azo compounds and organic peroxides.

Examples of the azo compound include azobisisobutyronitrile (AIBN), 2,2'-azobis(2,4-dimethylvaleronitrile) (ABVN), 4,4'-azobis(4-cyanopentanoic acid) (ABCVA), 2,2'-azobis(2-methylbutyronitrile) (AMBN), 2,2'-azobis(2-methylpropionamidine) dihydrochloride (AAPH), dimethyl 2,2'-azobis(2-methylpropionic acid), and 2,2'-azobis[2-(2-imidazoline-2-yl)propane] dihydrochloride, and one type or two or more types of these can be used.

Examples of the organic peroxide include: peroxyketals such as 2,2-bis(4,4-di-tert-butylperoxycyclohexyl)propane, 1,1-di(tert-hexylperoxy)cyclohexane, 1,1-di(tert-butylperoxy)cyclohexane, n-butyl-4,4-di(tert-butylperoxy) valerate, and 2,2-di(tert-butylperoxy)butane; hydroperoxides such as tert-butyl hydroperoxide, cumene hydroperoxide, diisopropylbenzene hydroperoxide, p-menthane hydroperoxide, and 1,1,3,3,-tetramethylbutyl hydroperoxide; dialkyl peroxides such as tert-butyl cumyl peroxide, di-tert-butyl peroxide, and di-tert-hexyl peroxide; diacyl peroxides such as diisobutyl peroxide, di(3,5,5-trimethylhexanol) peroxide, dilauroyl peroxide, disuccinic acid peroxide, and benzoyl peroxide; peroxydicarbonates such as diisopropyl peroxydicarbonate, di-n-propylperoxydicarbonate, bis(4-tert-butylcyclohexyl) peroxydicarbonate, di-2-ethylhexylperoxydicarbonate, and di-sec-butylperoxydicarbonate; peroxyesters such as cumyl peroxy neodecanoate, 1,1,3,3,-tetramethylbutyl peroxy neodecanoate, tert-hexyl peroxy neodecanoate, tert-butyl peroxy neodecanoate, tert-hexyl peroxy pivalate, tert-butyl peroxy pivalate, 2,5-dimethyl-2,5-di(2-ethylhexanoylperoxy)hexane, 1,1,3,3,-tetramethylbutylperoxy-2-ethylhexanoate, tert-hexylperoxy-2-ethylhexanoate, tert-butylperoxy-2-ethylhexanoate, tert-butyl peroxylaurate, tert-butyl peroxy-3,5,5-trimethylhexanoate, tert-hexyl peroxyisopropyl monocarbonate, tert-butyl peroxyisopropyl monocarbonate, tert-butylperoxy-2-ethylhexyl monocarbonate, 2,5-dimethyl-2,5-di(benzoylperoxy)hexane, tert-butyl peroxyacetate, tert-hexyl peroxybenzoate, and tert-butyl peroxybenzoate; and dialkyl peroxides such as dicumyl peroxide, α,α'-di(tert-butylperoxy)diisopropylbenzene, tert-butyl cumyl peroxide, 2,5-dimethyl-2,5-di(tert-butylperoxy)hexane, and 2,5-dimethyl -2,5-bis(tert-butylperoxy)hex-3-yne, and one type or two or more types thereof can be used.

Among the above, from a point of view of the curability of the component (B) and from a point of view of achieving a long pot life of the composition during storage at room temperature, the component (D) is preferably an organic peroxide, more preferably at least one selected from the group consisting of peroxyketal, hydroperoxide, diacyl peroxide, peroxydicarbonate, peroxyester, and dialkyl peroxide, further preferably dialkyl peroxide, and still more preferably 2,5-dimethyl-2,5-di(tert-butylperoxy)hexane.

The content of the component (D) in the thermosetting resin composition is preferably from 0.01 to 5 parts by mass, more preferably from 0.05 to 2 parts by mass, further preferably from 0.1 to 2 parts by mass, and still more preferably from 0.5 to 2 parts by mass, per 100 parts by mass of the component (B). When the content of the component (D) in the thermosetting resin composition is 0.01 parts by mass or more per 100 parts by mass of the component (B), curability is easily ensured, and when the content is 5 parts by mass or less, a long pot life is easily achieved.

### <Component (E): Ground natural silica stone>

The thermosetting resin composition may further contain ground natural silica stone as a component (E). When the thermosetting resin composition contains the component (E), the hardness can be enhanced while suppressing the decrease in elongation percentage of the resultant cured product.

Natural silica stone is a generic term for natural siliceous rocks produced in Japan and various places in the world, and examples thereof include quartz sand containing SiO₂ and further containing impurities such as Al and Fe. The ground natural silica stone is a finely ground product of the natural silica stone.

From a point of view of improving the hardness of the resultant cured product, the D50 of the component (E) as measured by a laser scattering/diffraction method is preferably from 0.5 to 10 µm and the uniformity coefficient K represented by D60/D10 is preferably from 2 to 8.

When the thermosetting resin composition contains the component (E), the content of the component (E) in the thermosetting resin composition is preferably from 0.01 to 10 mass%, more preferably from 0.05 to 5.0 mass%, and further preferably from 0.1 to 3.0 mass%. When the content of the component (E) in the thermosetting resin composition is 0.01 mass% or more, it contributes to the improvement of the hardness of the resultant cured product, and when the content is 10 mass% or less, the hardness can be enhanced while suppressing the decrease in elongation percentage of the cured product.

Note that the content of the component (E) includes not only the ground natural silica stone intentionally blended in the thermosetting resin composition but also a ground natural silica stone derived from the raw material of the composition or mixed in the manufacturing process of the composition.

### <Other components>

The thermosetting resin composition may further contain other components such as a filler, a modifying component such as a plasticizer, a flow adjusting component such as a thixotropic agent, a reactive or non-reactive diluent, a pigment, a leveling agent, a tackifier, and a stress relaxation component according to the intended use.

Among the above, examples of the stress relaxation component include elastomer particles such as silicone elastomer particles, butyl acrylate elastomer particles, polyether amine elastomer particles, and other rubber particles. In addition, a liquid rubber component such as epoxidized polybutadiene can also be used. Examples of commercially available products of the stress relaxation component include "Kane Ace" B series, FM series, M series, and MX series available from KANEKA CORPORATION, and "EBOLEAD PB3600" and "EBOLEAD PB4700" which are liquid epoxidized polybutadienes available from Daicel Corporation.

When the thermosetting resin composition contains a stress relaxation component, the content thereof is preferably from 0.1 to 15 mass%, more preferably from 0.5 to 10 mass% in the solid content of the thermosetting resin composition. Note that "solid content of the thermosetting resin composition" is an amount excluding water and organic solvents from total amount of the thermosetting resin composition.

### <Solvent>

The thermosetting resin composition of the present invention may further contain a solvent from a point of view of enhancing impregnating ability into reinforcing fibers.

Examples of the solvent include alcohol-based solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester-based solvents such as ethyl acetate and butyl acetate; ketone-based solvent such as acetone, methylethylketone, and methylisobutylketone; ether-based solvents such as diethyl ether and diisopropyl ether; and hydrocarbon-based solvents such as toluene, and one type or two or more types of these solvents can be used.

From a point of view of the solubility of blending components and from a point of view of the easiness of removing the solvent, the solvent is preferably at least one selected from the group consisting of alcohol-based solvents, ester-based solvents, ketone-based solvents, and hydrocarbon-based solvents, each of which having 8 or less carbons, and more preferably at least one selected from the group consisting of methanol, ethanol, 1-propanol, 2-propanol, 1-butanol, 2-butanol, ethyl acetate, methylethylketone, methylisobutylketone, and toluene.

The total content of the components (A) to (D) in the thermosetting resin composition is preferably 70 mass% or more, more preferably 80 mass% or more, further preferably 90 mass% or more, even more preferably 95 mass% or more, and 100 mass% or less in the solid content of the thermosetting resin composition from a point of view of effectively exhibiting the effect of the present invention.

When the thermosetting resin composition contains a solvent, the content thereof is not particularly limited, but is preferably 5 mass% or more, more preferably 10 mass% or more, further preferably 15 mass% or more in the thermosetting resin composition from a point of view of enhancing the impregnating ability into the reinforcing fiber, and is preferably 80 mass% or less, more preferably 70 mass% or less from a point of view of the easiness of removing the solvent.

The thermosetting resin composition may be a solvent-free type composition that contains substantially no solvents. The solvent-free type thermosetting resin composition refers to a thermosetting resin composition, in which the content of the solvent is preferably less than 5 mass%, more preferably 2 mass% or less, further preferably 1 mass% or less, even more preferably 0.5 mass% or less, and even more preferably 0 mass%.

The method of preparing the thermosetting resin composition is not particularly limited, and the thermosetting resin composition can be prepared by mixing the components (A) to (D) and other components used as necessary using a known method and apparatus. The order of mixing the components contained in the thermosetting resin composition is also not particularly limited, but when the component (A) and the component (B) have high viscosity, the component (A) and the component (B) are preferably heated and mixed at a temperature within a range of from 80 to 120°C in advance, and then cooled to lower than 80°C, followed by mixing of the component (C) and the component (D). This is to prevent the thermal polymerization of the component (C) from proceeding during the preparation of the thermosetting resin composition.

### [Cured product]

The cured product of the thermosetting resin composition of the present invention (hereinafter, also simply referred to as "cured product of the present invention") is a thermally cured product of the thermosetting resin composition of the present invention described above by a known method. The curing conditions of the thermosetting resin composition are appropriately selected depending on the intended use and form, but the curing temperature is preferably from 90 to 160°C, and more preferably from 100 to 150°C.

The form of the cured product of the present invention is also not particularly limited, and can be selected according to the intended use. For example, when the intended use of the thermosetting resin composition is a coating material, the cured product of the composition is usually in the form of a film. Note that, from a point of view of effectively exhibiting the effect of the present invention, the cured product of the present invention is preferably a matrix resin of a fiber-reinforced composite material described later.

The glass transition temperature (Tg) of the cured product of the present invention is preferably 80°C or higher, more preferably 85°C or higher, further preferably 87°C or higher, and even more preferably 90°C or higher, and usually 200°C or lower from a point of view of using in the cured product for a matrix resin of a fiber-reinforced composite material described later, a high-pressure gas container, and the like. Tg of the cured product can be specifically measured by the method described in Examples.

### [Prepreg]

The prepreg of the present invention contains the thermosetting resin composition and reinforcing fibers.

Examples of the form of the reinforcing fibers used in the prepreg include short fibers, long fibers, and continuous fibers. Among them, from a point of view of using the resultant prepreg as a material that makes up a high-pressure gas container described later, long fibers or continuous fibers are preferable, and continuous fibers are more preferable.

Note that, as used herein, the short fibers refer to fibers having a fiber length of 0.1 mm or more and less than 10 mm, and the long fibers refer to fibers having a fiber length of 10 mm or more and 100 mm or less. The continuous fiber refers to a fiber bundle having a fiber length of more than 100 mm.

Examples of the shape of the continuous fibers include a tow, a sheet, and a tape, and examples of the continuous fibers that make up the sheet or the tape include a unidirectional (UD) material, a woven fabric, and a nonwoven fabric.

From a point of view of producing a high-pressure gas container by a filament winding process or a tape winding process using a prepreg, the shape of the continuous fibers is preferably a tow or a tape, and more preferably a tow. The number of continuous fiber bundles (the number of filaments) included in the tow is preferably from 3 K to 50 K, and more preferably from 6 K to 40 K from a point of view of easiness to obtain a high strength and a high elastic modulus.

In the continuous fibers, the average fiber length of the continuous fiber bundle is not particularly limited, but is preferably from 1 to 10000 m, and more preferably from 100 to 10000 m from a point of view of molding processability.

The average fineness of the continuous fiber bundle is preferably from 50 to 2000 tex (g/1000 m), more preferably from 200 to 1500 tex, and further preferably from 500 to 1500 tex from a point of view of molding processability and from a point of view of easiness to obtain a high strength and a high elastic modulus.

The average tensile modulus of elasticity of the continuous fiber bundle is preferably from 50 to 1000 GPa.

Examples of a material for the reinforcing fibers include inorganic fibers such as carbon fibers, glass fibers, basalt fibers, metal fibers, boron fibers, and ceramic fibers; and organic fibers such as aramid fibers, polyoxymethylene fibers, aromatic polyamide fibers, polyparaphenylenebenzobisoxazole fibers, and ultra-high-molecular-weight polyethylene fibers. Among them, inorganic fibers are preferable from a point of view of obtaining a high strength, and the reinforcing fiber is preferably at least one selected from the group consisting of carbon fibers, glass fibers, and basalt fibers from a point of view of lightweight and high strength, and high elastic modulus, and more preferably carbon fibers from a point of view of strength and lightweight.

Examples of the carbon fibers include polyacrylonitrile-based carbon fibers and pitch-based carbon fibers. In addition, carbon fibers made from plant-based raw materials such as lignin and cellulose can also be used.

The reinforcing fibers may be a product treated with a treatment agent. Examples of the treatment agent include a surface treatment agent or a sizing agent.

The surface treatment agent is preferably a silane coupling agent. Examples of the silane coupling agent include silane coupling agents each having a vinyl group, silane coupling agents each having an amino group, silane coupling agents each having an epoxy group, silane coupling agents each having a (meth)acrylic group, and silane coupling agents each having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and one type thereof can be used, or two or more types thereof can be used in combination. Examples of combinations of two or more types of the sizing agents include urethane/epoxy-based sizing agents, urethane/acrylic-based sizing agents, and urethane/carboxylic acid-based sizing agents.

The amount of the treatment agent is preferably from 0.001 to 5 mass%, more preferably from 0.1 to 3 mass%, and further preferably from 0.5 to 2 mass% with respect to the reinforcing fibers from a point of view of improving interfacial adhesion between the fibers and the cured product of the thermosetting resin composition and further improving the strength and impact resistance of the resulting prepreg and composite material.

A commercially available product can also be used as the reinforcing fibers. Examples of commercially available continuous carbon fibers (tows) include TORAYCA YARN such as each series of "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", which are available from Toray Industries, Inc.; Tenax such as "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are available from TEIJIN LIMITED; and carbon fiber tows such as PYROFIL "HT", "IM", "HM" series, GRAFIL "HT" series and "DIALEAD" series, which are available from Mitsubishi Chemical Corporation.

Furthermore, examples of commercially available continuous carbon fibers other than tows include carbon fiber fabrics such as TORAYCA CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; and carbon fiber fabrics such as PYROFIL "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation.

From a point of view of achieving high strength and high elastic modulus, the content of reinforcing fibers in the prepreg is within a range such that the volume fraction of reinforcing fibers in the prepreg is preferably 0.10 or more, more preferably 0.20 or more, further preferably 0.30 or more, and even more preferably 0.40 or more. From a point of view of gas barrier properties, impact resistance, and molding processability, the content of reinforcing fibers in the prepreg is within a range such that the volume fraction of reinforcing fibers in the prepreg is preferably 0.85 or less, more preferably 0.80 or less, and further preferably 0.70 or less.

The volume fraction Vf₁ of reinforcing fibers in the prepreg can be calculated from the following equation. 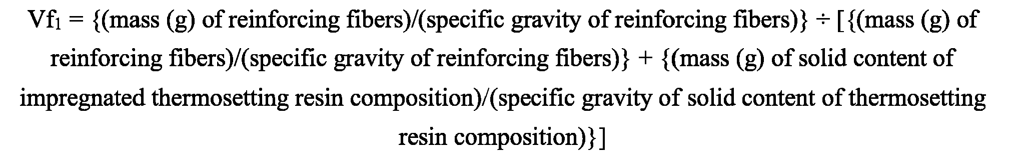 Vf1 = {(mass (g) of reinforcing fibers)/(specific gravity of reinforcing fibers)} ÷ [{(mass (g) of reinforcing fibers)/(specific gravity of reinforcing fibers)} + {(mass (g) of solid content of impregnated thermosetting resin composition)/(specific gravity of solid content of thermosetting resin composition)}]

From a point of view of achieving the effect of the present invention, the total content of the solid content of the thermosetting resin composition and the reinforcing fibers included in the prepreg is preferably 70 mass% or more, more preferably 80 mass% or more, further preferably 90 mass% or more, and the upper limit is 100 mass%.

### <Shape and manufacturing method of prepreg>

The shape of the prepreg varies depending on the form of the reinforcing fiber to be used, but it is preferably a tow-prepreg from a point of view of manufacturing a high-pressure gas container by the filament winding process.

In addition, when using continuous fibers in the form of a unidirectional (UD) material, a woven fabric, a nonwoven fabric, or the like, the prepreg can also have a tape shape or a sheet shape. Among them, from a point of view of manufacturing a high-pressure gas container by the tape winding process, a tape-shaped prepreg is preferable, and a UD tape is more preferable.

The manufacturing method of the prepreg is not particularly limited, and the prepreg can be manufactured according to a common method. For example, the reinforcing fibers are impregnated with the thermosetting resin composition, and then subjected to a drying step as necessary to remove the solvent, and the prepreg can be obtained.

The method of impregnating the reinforcing fibers with the thermosetting resin composition is not particularly limited, and a known method can be appropriately used depending on the form of the reinforcing fibers, and the like. For example, in the case of manufacturing a tow-prepreg, mention may be made of a method in which a continuous fiber bundle unwound from a roll is impregnated into a resin bath filled with the thermosetting resin composition described above, thereby impregnating the continuous fiber bundle with the composition, and then the continuous fiber bundle is pulled up from the resin bath. Thereafter, a step of removing an excessive of thermosetting resin composition using a drawing roll or the like may be performed.

The impregnation with the thermosetting resin composition can also be performed under a pressurized condition or a depressurized condition as necessary.

Subsequently, if necessary, the reinforcing fibers impregnated with the thermosetting resin composition are subjected to a drying step to remove the solvent. The drying conditions in the drying step are not particularly limited, but are preferably conditions under which the solvent can be removed and the curing of the thermosetting resin composition does not excessively proceed. From this viewpoint, for example, the drying temperature can be selected in the range of from 30 to 120°C, and the drying time can be selected in the range of from 10 seconds to 5 minutes.

The prepreg obtained through the drying step may be wound once to form a prepreg product, or may be continuously subjected to the manufacturing of a fiber-reinforced composite material after being subjected to the drying step without winding or the like.

### [Fiber-reinforced composite material]

The fiber-reinforced composite material (hereinafter, also simply referred to as "composite material") of the present invention is obtained by curing the prepreg, and includes a cured product of the thermosetting resin composition and reinforcing fibers. The fiber-reinforced composite material of the present invention contains a cured product of thermosetting resin composition and thus has high heat resistance and high impact resistance.

The prepreg, the thermosetting resin composition, the reinforcing fibers used in the manufacturing of the composite material, and preferred aspects thereof are the same as those described above.

### <Content>

From a point of view of obtaining high strength and high elastic modulus, the content of the reinforcing fibers in the fiber-reinforced composite material is within a range such that the volume fraction of the reinforcing fibers in the fiber-reinforced composite material is preferably 0.10 or more, more preferably 0.20 or more, further preferably 0.30 or more, and even more preferably 0.40 or more. From a point of view of gas barrier properties, impact resistance, and molding processability, the content of reinforcing fibers in the fiber-reinforced composite material is within a range such that the volume fraction of reinforcing fibers in the fiber-reinforced composite material is preferably 0.85 or less, more preferably 0.80 or less, and further preferably 0.70 or less.

The volume fraction Vf of the reinforcing fibers in the fiber-reinforced composite material can be calculated from the following equation. 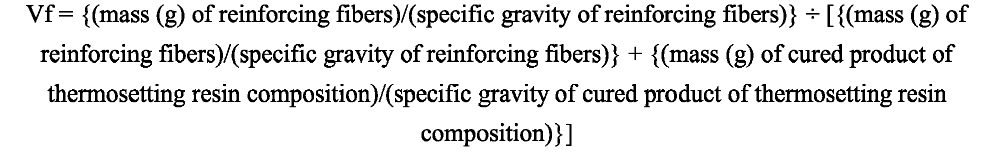 Vf = {(mass (g) of reinforcing fibers)/(specific gravity of reinforcing fibers)} ÷ [{(mass (g) of reinforcing fibers)/(specific gravity of reinforcing fibers)} + {(mass (g) of cured product of thermosetting resin composition)/(specific gravity of cured product of thermosetting resin composition)}]

### <Manufacturing method of fiber-reinforced composite material>

The manufacturing of the composite material can be carried out by using the prepreg to perform pre-molding to obtain a desired shape, and then curing the prepreg. For example, when the composite material of the present invention is applied to a molded body having a hollow shape such as a pipe, a shaft, a cylinder, or a tank, a prepreg having a tow or tape shape can be used and molded by the filament winding process, the tape winding process, the braiding process, the 3D printer process, or the like to manufacture the composite material.

In the filament winding process or the tape winding process, specifically, a prepreg in a tow or tape shape is wound around an outer surface of a balloon, a mandrel, or a liner, and then cured by heating, and thereby a composite material having a desired shape can be manufactured.

In the braiding process, for example, a step is performed in which a balloon or a mandrel is used to form a prepreg by braiding a tow or tape-shaped prepreg with a braider in one direction or to create a braid structure, and then curing the prepreg by heating. Note that, in the braiding process, a tow or tape-shaped prepreg may be made into a string and molded without using a balloon or a mandrel.

In case of using a sheet-shaped prepreg in which a unidirectional (UD) material, a woven fabric, a nonwoven fabric, or the like is used as the continuous fibers, one or more prepregs can be stacked and placed in a mold, and allowed to cure by heating under a vacuum condition or a pressurized condition to manufacture a composite material.

The curing method for the prepreg in the manufacturing of the composite material is also not particularly limited, and is performed by a known method at a temperature and time sufficient for curing the thermosetting resin composition contained in the prepreg. The curing conditions of the prepreg depend on the thickness of the prepreg and also the composite material to be formed, and for example, the curing temperature can be selected in the range of from 10 to 180°C and the curing time can be selected in the range of from 5 minutes to 200 hours, and from a point of view of productivity, the curing temperature is preferably in the range of from 80 to 180°C and the curing time is preferably in the range of from 10 minutes to 5 hours.

The composite material of the present invention is suitably used for a molded body having a hollow shape such as a pipe, a shaft, a cylinder, or a tank from a point of view of manufacturing using a tow or tape-shaped prepreg. The composite material is suitable as a material for forming a high-pressure gas container.

### [High-pressure gas container]

The high-pressure gas container of the present invention includes the fiber-reinforced composite material. The high-pressure gas container of the present invention needs to be configured such that at least a part thereof is made of the fiber-reinforced composite material. For example, in a case of a high-pressure gas container having a liner and an outer layer provided so as to cover the outer surface of the liner, examples thereof include a high-pressure gas container in which at least one of the liner and the outer layer is made of the fiber-reinforced composite material. In a case of a linerless high-pressure gas container, examples thereof include the entire container is made of the fiber-reinforced composite material.

Examples of specific aspects of the high-pressure gas container containing the fiber-reinforced composite material include (1) a configuration having a metallic liner and an outer layer made of the fiber-reinforced composite material of the present invention, (2) a configuration having a resin liner and an outer layer made of the fiber-reinforced composite material of the present invention, (3) a configuration having a liner made of the fiber-reinforced composite material of the present invention and an outer layer made of a material other than the fiber-reinforced composite material, and (4) a (linerless) configuration only including a container made of the fiber-reinforced composite material of the present invention.

Examples of the metal used in the "metallic liner" in the aspect (1) include light alloys such as aluminum alloys and magnesium alloys.

The resin used for the "resin liner" in the aspect (2) is not particularly limited as long as it is a resin excellent in gas barrier properties and pressure resistance, and examples thereof include thermoplastic resins, cured products of thermosetting resins, and cured products of photocurable resins. Among them, a thermoplastic resin is preferred from the point of view that the liner can be easily molded

Examples of the thermoplastic resin include polyamide resins, polyester resins, polyolefin resins, polyimide resins, polycarbonate resins, polyetherimide resins, polyamideimide resins, polyphenylene etherimide resin, polyphenylene sulfide resins, polysulfone resins, polyethersulfone resins, polyarylate resins, liquid crystal polymers, polyetheretherketone resins, polyetherketone resins, polyetherketoneketone resins, polyetheretherketoneketone resins, and polybenzimidazole resins, and one type thereof can be used, or two or more types thereof can be used in combination.

From a point of view of gas barrier properties and pressure resistance, the thermoplastic resin is preferably at least one selected from the group consisting of a polyamide resin and a polyolefin resin, and more preferably a polyamide resin.

Besides, from a point of view of enhancing impact resistance, the resin liner may contain the above-described stress relaxation component.

As the "outer layer made of a material other than the fiber-reinforced composite material" in the aspect (3), preferable examples thereof include an outer layer made of a fiber-reinforced composite material other than the fiber-reinforced composite material of the present invention from a point of view of improving reinforcing properties.

In the aspects (1) to (3), the outer layer can be formed so as to cover the outer surface of the main body portion of the liner without any gaps.

The outer layer may be provided directly on the outer surface of the liner. Alternatively, one additional layer or two or more additional layers may be provided on the outer surface of the liner, and the outer layer may be provided on the surface of the additional layer. For example, an adhesive layer may be provided between the liner and the outer layer in order to improve adhesion between the liner and the outer layer.

In a case where the high-pressure gas container is of the aspect of (1) or (2), the thickness of the outer layer made of the fiber-reinforced composite material of the present invention can be appropriately selected according to the capacity, shape, and the like of the high-pressure gas container, but the thickness of the outer layer is preferably 100 µm or more, more preferably 200 µm or more, further preferably 400 µm or more from a point of view of imparting high gas barrier properties and impact resistance, and is preferably 80 mm or less, more preferably 60 mm or less from a point of view of reducing the size and weight of the high-pressure gas container.

In a case where the high-pressure gas container is of the aspect (3), the thickness of the liner made of the fiber-reinforced composite material of the present invention can be appropriately selected according to the capacity, shape, and the like of the high-pressure gas container, but the thickness of the liner is preferably 100 µm or more, more preferably 200 µm or more, and further preferably 400 µm or more from a point of view of gas barrier properties and pressure resistance, and is preferably 60 mm or less, and more preferably 40 mm or less from a point of view of reducing the size and weight of the high-pressure gas container.

In a case where the high-pressure gas container is of the aspect (4), the thickness of the container made of the fiber-reinforced composite material of the present invention can be appropriately selected according to the capacity, shape, and the like of the high-pressure gas container, but the thickness of the container is preferably 1 mm or more, more preferably 2 mm or more, and further preferably 5 mm or more from a point of view of gas barrier properties and pressure resistance, and is preferably 80 mm or less, and more preferably 60 mm or less from a point of view of reducing the size and weight of the high-pressure gas container.

From a point of view of achieving high strength and high elastic modulus, the content of the reinforcing fibers in the liner, in the outer layer, or in the high-pressure gas container made of the fiber-reinforced composite material of the present invention is within a range such that the volume fraction of the reinforcing fibers is preferably 0.10 or more, more preferably 0.20 or more, further preferably 0.30 or more, and even more preferably 0.40 or more. From a point of view of gas barrier properties, impact resistance, and molding processability, the content is within a range such that the volume fraction of the reinforcing fibers is preferably 0.85 or less, more preferably 0.80 or less, further preferably 0.75 or less, and even more preferably 0.70 or less.

The volume fraction of the reinforcing fibers can be calculated by the same method as described above.

Among those described above, the high-pressure gas container is preferably of any of the aspects (2), (3), or (4), and more preferably of the aspect (3) or (4) from a point of view of lightweight and the point of view that high gas barrier properties are required for the fiber-reinforced composite material.

Note that, the high-pressure gas container may further include parts made of a material other than the fiber-reinforced composite material, such as a connector and a valve. Furthermore, any optional layer such as a protective layer, a coating layer, and a rust preventive-containing layer may be formed on the surface of the high-pressure gas container.

The gas to be stored in the high-pressure gas container needs to be in gaseous state at 25°C and 1 atm (1 atm = 101.325 kPa), and examples thereof include oxygen, carbon dioxide, nitrogen, argon, LPG, a substitute for CFCs, and methane, besides hydrogen. Among them, hydrogen is preferable from a point of view of the effectiveness of the present invention.

### <Manufacturing method of high-pressure gas container>

As a manufacturing method of the high-pressure gas container of the present invention, the manufacturing methods described in Manufacturing method of fiber-reinforced composite material described above can be appropriately used according to the form of the reinforcing fibers or the prepreg to be used. In a case where a tow or tape-shaped prepreg is used to manufacture a high-pressure gas container, the tow or tape-shaped prepreg is molded by the filament winding process, the tape winding process, the braiding process, the 3D printer process, or the like and thereby enabling to manufacture the high-pressure gas container.

In a case where the high-pressure gas container is of the aspect (1) or (2), by using the filament winding process or the tape winding process, a tow or tape-shaped prepreg is wound so as to cover an outer surface of a metallic or resin liner, and then cured by heating to form an outer layer made of the fiber-reinforced composite material, whereby the high-pressure gas container can be manufactured.

In a case where the high-pressure gas container is of the aspect (3) or (4), a tow or tape-shaped prepreg is formed into a container shape by the filament winding process, the tape winding process, the braiding process, the 3D printer process, or the like, and then cured by heating, whereby the high-pressure gas container can be manufactured.

### Examples

Hereinafter, the present invention will be described in detail with reference to Examples and Comparative Examples, but the present invention is not limited to the following Examples. Note that the measurements and evaluations in the present Examples were performed by the methods set forth below.

### <Glass transition temperature (Tg)>

Using a differential scanning calorimeter "DSC25" (available from TA Instruments), about 5 mg of the thermosetting resin composition of each example was completely cured by heating from 30 to 250°C at a temperature rising rate of 10°C/min. This cured product was cooled to 30°C and then heated again from 30 to 225°C under the condition of a temperature raising rate of 10°C/min, this operation was repeated twice, and Tg of the cured product was determined from the measurement chart during the second heating.

### <Elongation percentage>

The thermosetting resin composition prepared in each example was formed into a flat plate of 200 mm × 200 mm × 2 mm thickness, and thermally cured in a hot air oven at 130°C for 180 minutes to prepare a cured product. A strip piece having a size of 180 mm × 15 mm × 2 mm thickness was cut out from the cured product to give a tensile test piece.

Using the test piece, a tensile test was performed (N = 3) under the following conditions using a precision universal tester ("Autograph AGX-plus" available from Shimadzu Corporation), and the elongation percentage was calculated by the following equation. The length of the test piece at break was calculated from the amount of displacement of the load cell at break. 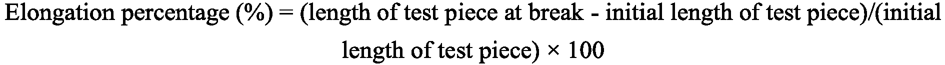 Elongation percentage (%) = (length of test piece at break - initial length of test piece)/(initial length of test piece) × 100
Distance between grips: 115 mm
Load cell (tensile force): 1 kN
Tensile speed: 1 mm/min (tensile direction: longitudinal direction of test piece)

### <Standard deviation of elongation percentage>

The elongation percentage was measured three times using three test pieces, and the standard deviation at that time was determined and shown in the table. The standard deviation means that, the smaller its value is, the smaller the variation in physical properties of the cured product is and the better the cured product is.

### <Shore D hardness>

A cured product (test piece) of the thermosetting resin composition was prepared in the same manner as in the measurement of the elongation percentage. The test piece was placed in a horizontal place under an environment of 23°C, and an Asker rubber hardness tester type D (available from KOBUNSHI KEIKI CO.,LTD.) was pressed against it to measure the Shore D hardness, which are shown in the table. It means that, the larger the value, the higher the hardness.

### <Pot life>

The initial viscosity of the thermosetting resin composition at 23°C, prepared in each example, was measured, and then 10 g of the thermosetting resin composition was placed in a plastic cup (46 mm in diameter) and stored at 23°C. The time (weeks) for the viscosity of the thermosetting resin composition to be twice or more as high as the initial viscosity was measured and shown in the table.

The viscosity of the thermosetting resin composition was measured with an E-type viscometer "TVE-22H type viscometer (cone plate type)" (available from Toki Sangyo Co., Ltd).

### Examples 1 to 15 and Comparative Examples 1 to 2 (Preparation and evaluation of thermosetting resin composition)

The components shown in Table 1 were blended and mixed in parts by mass shown in Table 1 to give a thermosetting resin composition.

The resultant thermosetting resin composition was evaluated by the above-described method. The results are shown in Table 1.

Note that the blending amounts (parts by mass) in Table 1 each are the amount of the active ingredient.

### [Table 1]

**Table 1**

| (parts by mass) | | Examples | | | | | | | | | | | | | | | Comparative Examples | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 |
| (A) | jER807 | 100 | 100 | 100 | 100 | 100 | 100 | 100 | 100 | 100 | | 100 | 100 | 100 | 100 | 100 | 100 | 100 |
| | jER828 | | | | | | | | | | 85 | | | | | | | |
| | jER1004 | | | | | | | | | | 15 | | | | | | | |
| (B) | (B1) Poly (butadiene-CO-acrylonitrile) having an acryloyloxy group each at both termini | 5 | 5 | 10 | 10 | 20 | 5 | 5 | 20 | 25 | 5 | 5 | 7 | 5 | 5 | 5 | | |
| | (B2-1) Ethoxylated (2) bisphenol A dimethacrylate | 5 | 10 | 10 | 20 | 20 | | | 10 | 25 | | | | | | | | 20 |
| | (B2-2) Urethane dimethacrylate | | | | | | 10 | | | | | | | | | | | |
| | (B2-3) Urethane acrylate xylene resin | | | | | | | 10 | | | | | | | | | | |
| | (B2-4) Ethoxylated (5) bisphenol A dimethacrylate | | | | | | | | | | 25 | 25 | 36 | 25 | 25 | 25 | | |
| (C) | DY-9577 | 4 | 4 | 4 | 4 | 4 | 4 | 4 | 4 | 4 | 4 | 4 | 4 | 4 | 4 | 4 | 4 | 4 |
| (D) | PERHEXA 25B | 0.1 | 0.2 | 0.2 | 0.3 | 0.3 | 0.2 | 0.2 | 0.2 | 0.4 | 0.5 | 0.5 | 0.7 | 0.5 | 0.5 | 0.5 | | 0.3 |
| (E) | (E-1) Ground natural silica stone | | | | | | | | | | | | | 1.5 | | | | |
| | (E-2) Ground natural silica stone | | | | | | | | | | | | | | 1.5 | | | |
| | (E-3) Ground natural silica stone | | | | | | | | | | | | | | | 1.5 | | |
| Content of component (B) per 100 parts by mass of component (A) (parts by mass) | | 10 | 15 | 20 | 30 | 40 | 15 | 15 | 30 | 50 | 30 | 30 | 43 | 30 | 30 | 30 | 0 | 20 |
| Content of component (B1) in component (B) (mass%) | | 50.0 | 33.3 | 50.0 | 33.3 | 50.0 | 33.3 | 33.3 | 66.7 | 50.0 | 16.7 | 16.7 | 16.3 | 16.7 | 16.7 | 16.7 | - | 0.0 |
| Content of component (B2) in component (B) (mass%) | | 50.0 | 66.7 | 50.0 | 66.7 | 50.0 | 66.7 | 66.7 | 33.3 | 50.0 | 83.3 | 83.3 | 83.7 | 83.3 | 83.3 | 83.3 | - | 100.0 |
| Content of component (D) per 100 parts by mass of component (B) (parts by mass) | | 0.77 | 1.02 | 0.77 | 1.02 | 0.77 | 1.02 | 1.02 | 0.51 | 0.77 | 1.53 | 1.53 | 1.53 | 1.53 | 1.53 | 1.53 | - | 1.53 |
| Content of component (E) in thermosetting resin composition (mass%) | | 0 | 0 | 0 | 0 | 0 | 0 | 0 | 0 | 0 | 0 | 0 | 0 | 1.1 | 1.1 | 1.1 | 0 | 0 |
| Evaluation results | Tg (°C) | 91 | 95 | 88 | 90 | 85 | 92 | 93 | 86 | 81 | 125 | 113 | 113 | 113 | 113 | 113 | 150 | 90 |
| | Elongation percentage (%) | 4.3 | 4.6 | 5.4 | 6.2 | 6.6 | 4.3 | 4.5 | 5.4 | 9.4 | 6.4 | 6.2 | 7.8 | 6.2 | 6.2 | 6.1 | 3.3 | 3.2 |
| | Standard deviation of elongation percentage (N = 3) | 0.13 | 0.07 | 0.10 | 0.09 | 0.15 | 0.10 | 0.16 | 1.4 | 5.3 | 0.14 | 0.12 | 0.15 | 0.18 | 0.17 | 0.20 | 0.10 | 0.41 |
| | Shore D hardness | 80 | 80 | 80 | 80 | 80 | 80 | 80 | 80 | 80 | 80 | 80 | 80 | 83 | 83 | 83 | 85 | 80 |
| | Pot life stored at 23°C (weeks) | > 24 | > 24 | > 24 | > 24 | > 24 | > 24 | > 24 | > 24 | > 24 | > 24 | > 24 | > 24 | > 24 | > 24 | > 24 | 20 | > 24 |

The components listed in Table 1 are as follows.

### <Epoxy resin (A)>

- (A) jER807: bisphenol F diglycidyl ether (liquid epoxy resin), "jER 807" available from Mitsubishi Chemical Corporation, epoxy equivalent: 168 g/equivalent
- (A) jER828: bisphenol A diglycidyl ether (liquid epoxy resin), "jER 828" available from Mitsubishi Chemical Corporation, epoxy equivalent: 186 g/equivalent
- (A) jER1004: bisphenol A (polymer type) diglycidyl ether (polymer type/solid epoxy resin), "jER 1004" available from Mitsubishi Chemical Corporation, epoxy equivalent: 1026 g/equivalent

### <(Meth)acrylate compound (B)>

- (B1) Poly(butadiene-CO-acrylonitrile) having an acryloyloxy group each at both termini: "Hypro 1300X33 LC" available from CHORI GLEX Co., Ltd.
- (B2-1) Ethoxylated (2) bisphenol A dimethacrylate, a compound represented by the general formula (B2-1) in which R¹ = R² = CH₃, R³ = R⁴ = CH₃, and m = n = 1 (m + n = 2)
- (B2-2) Urethane dimethacrylate: urethane dimethacrylate represented by the general formula (B2-2) in which R⁵ is an alkylene group having 3 carbons, X is a hexamethylene group, and Y is a divalent group represented by the general formula (Y1) (R⁶ and R⁷ are methyl groups)
- (B2-3) Urethane acrylate xylene resin: urethane acrylate having a structure derived from xylene resin, "NIKANOL XUAT" available from Fudow Company Limited
- (B2-4): Ethoxylated (5) bisphenol-A dimethacrylate, a compound represented by the general formula (B2-1) in which R¹ = R² = CH₃, R³ = R⁴ = CH₃, and m = n = 5 (m + n = 10), "SR-480" available from Arkema

### <Epoxy resin curing agent (C)>

- (C) DY-9577: boron trichloride amine complex (amine component: N,N-dimethyl-n-octylamine), "Accelerator DY 9577" available from HUNTSMAN Corporation

### <Thermal radical polymerization initiator (D)>

- (D) PERHEXA 25B: 2,5-dimethyl-2,5-di(tert-butylperoxy)hexane, "PERHEXA 25B" available from NOF CORPORATION

### <Ground natural silica stone (E)>

- (E-1) Ground natural silica stone, D50: 1.13 µm, uniformity coefficient K: 3.38
- (E-2) Ground natural silica stone, D50: 4.00 µm, uniformity coefficient K: 3.99
- (E-3) Ground natural silica stone, D50: 5.67 µm, uniformity coefficient K: 5.83

It can be seen from Table 1 that the cured products of the thermosetting resin composition of the present invention have achieved a glass transition temperature of 80°C or higher and an elongation percentage of 4% or more. The thermosetting resin composition also has a long pot life.

Among them, the thermosetting resin compositions of Examples 1 to 7 and 10 to 15 have achieved less variation in measurement values of the elongation percentage, and Tg of the cured product of 85°C or higher.

In contrast, the thermosetting resin composition (epoxy resin composition) of Comparative Example 1 which contains neither the component (B) nor the component (D) had a short pot life, and the elongation percentage of the cured product did not reach 4%. The elongation percentage of the cured product of the thermosetting resin composition of Comparative Example 2 which does not contain the component (B1) also did not reach 4%.

### Industrial Applicability

The present invention can provide: a thermosetting resin composition which can provide a cured product having a high glass transition temperature and a high elongation percentage and has a long pot life; a cured product thereof; a prepreg; a fiber-reinforced composite material; and a high-pressure gas container containing the fiber-reinforced composite material. The high-pressure gas container can be manufactured by filament winding molding using the prepreg of the present invention, and can also be made into a plastic liner high-pressure gas container or a linerless high-pressure gas container.

## Claims

1. A thermosetting resin composition comprising:
a component (A): an epoxy resin,
a component (B): a (meth)acrylate compound,
a component (C): an epoxy resin curing agent, and
a component (D): a thermal radical polymerization initiator,
wherein the component (B) comprises a component (B1): a poly (butadiene-CO-acrylonitrile) having an acryloyloxy group each at both termini and a component (B2): a polyfunctional (meth)acrylate other than the component (B1), and
the component (C) comprises a boron amine complex.

2. The thermosetting resin composition according to claim 1, wherein the component (B2) comprises a polyfunctional (meth)acrylate containing an aromatic ring.

3. The thermosetting resin composition according to claim 1 or 2, wherein a content of the component (B) is from 5 to 50 parts by mass per 100 parts by mass of the component (A) in the thermosetting resin composition.

4. The thermosetting resin composition according to any one of claims 1 to 3, wherein a content of the component (B1) in the component (B) is from 1 to 70 mass%.

5. The thermosetting resin composition according to any one of claims 1 to 4, wherein the boron amine complex is a boron trichloride amine complex.

6. The thermosetting resin composition according to any one of claims 1 to 5, wherein an amine component in the boron amine complex is a trialkylamine.

7. A cured product of the thermosetting resin composition described in any one of claims 1 to 6.

8. A prepreg comprising the thermosetting resin composition described in any one of claim 1 to 6, and a reinforcing fiber.

9. The prepreg according to claim 8, wherein the prepreg is a tow-prepreg.

10. A fiber-reinforced composite material produced by curing the prepreg described in claim 8 or 9.

11. A high-pressure gas container comprising the fiber-reinforced composite material described in claim 10.

## Patentansprüche

1. Eine wärmehärtende Harzzusammensetzung, umfassend:
eine Komponente (A): ein Epoxidharz,
eine Komponente (B): eine (Meth)acrylatverbindung,
eine Komponente (C): ein Epoxidharz-Härtungsmittel, und
eine Komponente (D): ein thermischer radikalischer Polymerisationsinitiator,
wobei die Komponente (B) eine Komponente (B1): ein Poly(butadien-CO-acrylnitril) mit jeweils einer Acryloyloxygruppe an beiden Enden, und eine Komponente (B2): ein polyfunktionelles (Meth)acrylat, welches sich von der Komponente (B1) unterscheidet, umfasst, und
die Komponente (C) einen Boraminkomplex umfasst.

2. Die wärmehärtende Harzzusamensetzung gemäß Anspruch 1, wobei die Komponente (B2) ein polyfunktionelles (Meth)acrylat umfasst, welches einen aromatischen Ring enthält.

3. Die wärmehärtende Harzzusammensetzung gemäß Anspruch 1 oder 2, wobei ein Gehalt der Komponente (B) 5 bis 50 Massenteile pro 100 Massenteile der Komponente (A) in der wärmehärtenden Harzzusammensetzung beträgt.

4. Die wärmehärtende Harzzusammensetzung gemäß einem der Ansprüche 1 bis 3, wobei ein Gehalt der Komponente (B1) in der Komponente (B) 1 bis 70 Massen-% beträgt.

5. Die wärmehärtende Harzzusammensetzung gemäß einem der Ansprüche 1 bis 4, wobei der Boraminkomplex ein Bortrichloridaminkomplex ist.

6. Die wärmehärtende Harzzusammensetzung gemäß einem der Ansprüche 1 bis 5, wobei eine Aminkomponente in dem Boraminkomplex ein Trialkylamin ist.

7. Ein gehärtetes Produkt aus der wärmehärtenden Harzzusammensetzung wie in einem der Ansprüche 1 bis 6 beschrieben.

8. Ein Prepreg, umfassend die wärmehärtende Harzzusammensetzung wie in einem der Ansprüche 1 bis 6 beschrieben und eine Verstärkungsfaser.

9. Das Prepreg gemäß Anspruch 8, wobei das Prepreg ein Tow-Prepreg ist.

10. Ein faserverstärktes Verbundmaterial, hergestellt durch Härten des in Anspruch 8 oder 9 beschriebenen Prepregs.

11. Ein Hochdruckgasbehälter, umfassend das in Anspruch 10 beschriebene faserverstärkte Verbundmaterial.

## Revendications

1. Composition de résine thermodurcissable comprenant :
un composant (A) : une résine époxy,
un composant (B) : un composé (méth)acrylate,
un composant (C) : un agent durcisseur de résine époxy, et
un composant (D) : un amorceur de polymérisation radicalaire thermique,
dans laquelle le composant (B) comprend un composant (B1) : un poly(butadiène-CO-acrylonitrile) ayant un groupe acryloyloxy à chacune des deux extrémités et un composant (B2) : un (méth)acrylate polyfonctionnel autre que le composant (B1), et
le composant (C) comprend un complexe bore-amine.

2. Composition de résine thermodurcissable selon la revendication 1, dans laquelle le composant (B2) comprend un (méth)acrylate polyfonctionnel contenant un cycle aromatique.

3. Composition de résine thermodurcissable selon la revendication 1 ou 2, dans laquelle la teneur en composant (B) est de 5 à 50 parties en masse pour 100 parties en masse du composant (A) dans la composition de la résine thermodurcissable.

4. Composition de résine thermodurcissable selon l'une quelconque des revendications 1 à 3, dans laquelle la teneur en le composant (B1) dans le composant (B) est de 1 à 70 % en masse.

5. Composition de résine thermodurcissable selon l'une quelconque des revendications 1 à 4, dans laquelle le complexe bore-amine est un complexe de trichlorure de bore-amine.

6. Composition de résine thermodurcissable selon l'une quelconque des revendications 1 à 5, dans laquelle un composant amine du complexe bore-amine est une trialkylamine.

7. Produit durci de la composition de la résine thermodurcissable décrite dans l'une quelconque des revendications 1 à 6.

8. Préimprégné comprenant la composition de résine thermodurcissable décrite dans l'une quelconque des revendications 1 à 6, et une fibre de renforcement.

9. Préimprégné selon la revendication 8, dans lequel le préimprégné est un toron préimprégné.

10. Matériau composite renforcé par des fibres produit par durcissement du préimprégné décrit dans la revendication 8 ou 9.

11. Récipient pour gaz haute pression comprenant le matériau composite renforcé par des fibres décrit dans la revendication 10.
